(19)

Europäisches
Patentamt
European
Patent Office
Office européen
des brevets

(11) **EP 4 020 337 A1**

(12) **EUROPEAN PATENT APPLICATION**
published in accordance with Art. 153(4) EPC

(43) Date of publication:
**29.06.2022 Bulletin 2022/26**

(21) Application number: **20853657.3**

(22) Date of filing: **30.07.2020**

(51) International Patent Classification (IPC):
**G06N 20/00** *(2019.01)*

(52) Cooperative Patent Classification (CPC):
**G06N 20/00**

(86) International application number:
**PCT/JP2020/029357**

(87) International publication number:
**WO 2021/033515 (25.02.2021 Gazette 2021/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.08.2019 JP 2019151518**

(71) Applicant: **Aising Ltd.**
**Tokyo 107-0052 (JP)**

(72) Inventors:
• **IDESAWA, Junichi**
  **Tokyo 107-0052 (JP)**
• **SUGAWARA, Shimon**
  **Tokyo 107-0052 (JP)**

(74) Representative: **Kilian Kilian & Partner**
**Aidenbachstraße 54**
**81379 München (DE)**

(54) **INFORMATION PROCESSING DEVICE, METHOD, AND PROGRAM**

(57) Accuracy of machine learning is improved by preventing a search space from being wrongfully limited depending on an order of input columns to be a learning object. Provided is an information processing device which performs machine learning utilizing a tree structure model configured by branching and hierarchically arranging a plurality of nodes respectively corresponding to hierarchically divided state spaces, the information processing device including: a learning object dataset reading unit configured to read a learning object dataset formed of a plurality of input columns and one or more output columns; an importance degree calculation unit configured to calculate importance degrees of the individual input columns based on the learning object dataset; an order generation unit configured to generate an order of the individual input columns to be a base of branch determination of the individual nodes, based on the individual importance degrees; and a machine learning unit configured to perform the machine learning based on the learning object dataset and the order.

FIG. 7

EP 4 020 337 A1

## Description

Technical Field

The present invention relates to a machine learning technology, and in particular, relates to a machine learning technology utilizing a tree structure.

Background Art

In recent years, the field of machine learning has become highly popular. In such a background, the inventors of the present application are proposing a new machine learning framework (learning tree) having a tree structure (Patent Literature 1).

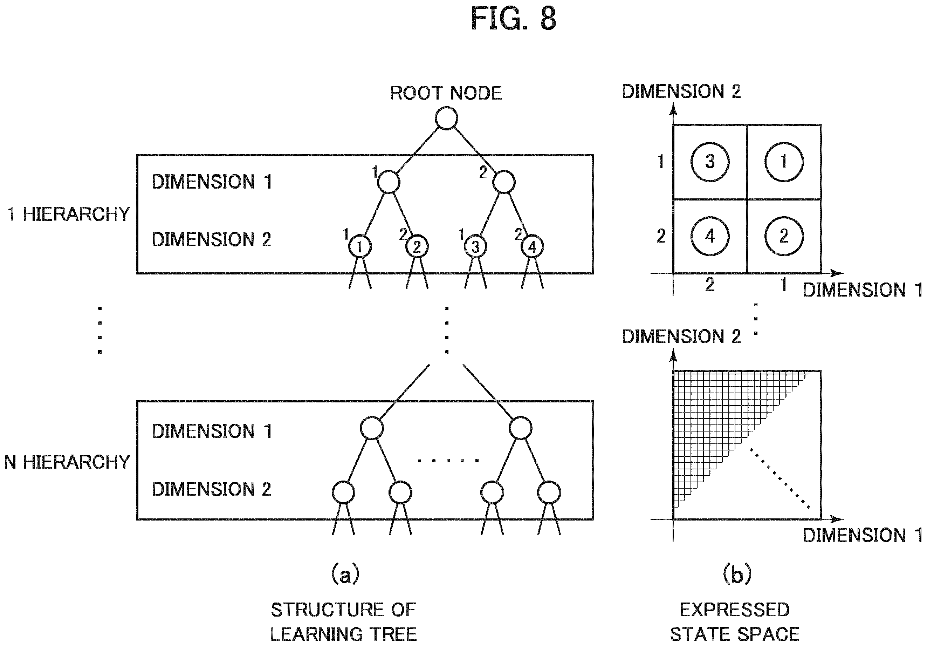

Figure 8 is an explanatory diagram illustrating the above-described new machine learning framework, that is, an explanatory diagram illustrating a structure of the learning tree. Figure 8(a) illustrates the structure of the learning tree in the learning method, and Figure 8(b) illustrates an image of a state space corresponding to the structure. It is clear from the figure that the learning tree structure is configured by branching and arranging individual nodes corresponding to individual hierarchically divided state spaces in a tree shape or a grid shape from a top node (a starting node or a root node) to a bottom node (a terminal node or a leaf node). Note that the figure illustrates an example of a case where d is 2 and n is 2 in the learning tree of N hierarchies, d dimensions and n divisions, and numbers 1-4 attached to four terminal nodes of the first hierarchy of the learning tree described in Figure 8(a) correspond to four state spaces described in Figure 8(b), respectively.

When performing learning processing using the learning tree, pieces of input data are successively made to correspond to the individual divided state spaces and they are stored in the individual state spaces. At the time, when data is newly inputted to the state space where the data has not been present until then, a new node is successively generated. Predicted output is calculated by taking an arithmetic mean of output values or output vectors corresponding to the individual pieces of data included in the individual state spaces after learning.

Citation List

Patent Literature

Patent Literature 1: Japanese Patent Laid-Open No. 2016-173686

Summary of Invention

Technical Problem

In the conventional machine learning framework of this kind, when input is multi-dimensional, branch determination is performed from a high order of the tree structure in order of provided input columns.

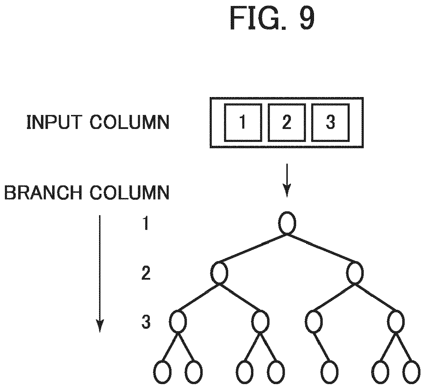

Figure 9 is an explanatory diagram for the conventional order of input columns used in the branch determination, that is, a branch column. In the case of the figure, the input is three-dimensional, and the order of the input columns is "input column 1", "input column 2" and "input column 3" in order from left. Conventionally, the order of the input columns used in the branch determination is not taken into special consideration, and is determined simply from the high order along the order of the individual provided input columns. That is, in the example of the diagram, the branch determination is performed based on "input column 1" for the top node (root node), based on "input column 2" for the node of a stage one below, and based on "input column 3" for the node one further below.

However, such a configuration causes various inconveniences. For example, in the case of Figure 9, if "input column 1" is the input column which hardly affects the output, when space division is performed in the top state space based on a value of the little significant "input column 1", since a search thereafter is performed based on the divided spaces, there is a risk that a search space is inappropriately narrowed.

The present invention is implemented under the above-described technical background, and the object is to improve accuracy of machine learning by preventing a search space from being wrongfully limited depending on the order of the input columns to be a learning object.

The other objects and effects of the present invention will be easily understood by any person skilled in the art by referring to the following description.

Solution to Problem

The above-described technical problem can be solved by a device, a method and a program or the like including a configuration below.

That is, in an information processing device which performs machine learning utilizing a tree structure model configured by branching and hierarchically arranging a plurality of nodes respectively corresponding to hierarchically divided state spaces, the information processing device relating to the present invention includes: a learning object dataset reading unit configured to read a learning object dataset formed of a plurality of input columns and one or more output columns; an importance degree calculation unit configured to calculate importance degrees of the individual input columns based on the learning object dataset; an order generation unit configured to generate an order of the individual input columns to be a base of branch determination of the individual nodes, based on the individual importance degrees; and a machine learning unit configured to perform the machine learning based on the learning object dataset and the order.

According to such a configuration, the state space is searched preferentially from the input column of a high importance degree so that the search space is not wrongfully limited. Therefore, since the state space to be originally searched can be fully searched, the accuracy of the machine learning can be improved. In addition, accompanying that, a learned model (prediction model) of excellent accuracy can be provided. Note that the word prediction means generating output data based on input data and the learned model.

The order generation unit may further include a detailed order generation unit configured to generate the order such that the input column of the high importance degree corresponds to an upper node in the tree structure model.

The individual importance degrees may be generated based on relevancy between the individual input columns and the individual corresponding output columns.

The relevancy may be an absolute value of a correlation coefficient between the individual input columns and the individual corresponding output columns.

The order generation unit may include: a maximum correlation coefficient input column specification unit configured to specify the input column for which the correlation coefficient is maximum among the individual input columns and perform incorporation into the order; a division unit configured to divide the correlation coefficient of the input column specified as having the maximum correlation coefficient by a predetermined numerical value; and a repetitive processing unit configured to repeatedly operate the maximum correlation coefficient input column specification unit and the division unit for a predetermined number of times and generate the order of the individual input columns.

The order generation unit may include an importance-degree-order order generation unit configured to generate the order of the individual input columns in order of the importance degrees of the individual input columns.

In addition, the present invention can be also conceived of as an information processing method. That is, in the information processing method which performs machine learning utilizing a tree structure model configured by branching and hierarchically arranging a plurality of nodes respectively corresponding to hierarchically divided state spaces, the information processing method relating to the present invention includes: a learning object dataset reading step of reading a learning object dataset formed of a plurality of input columns and one or more output columns; an importance degree calculation step of calculating importance degrees of the individual input columns based on the learning object dataset; an order generation step of generating an order of the individual input columns to be a base of branch determination of the individual nodes, based on the individual importance degrees; and a machine learning step of performing the machine learning based on the learning object dataset and the order.

Further, the present invention can be also conceived of as a computer program relating to the present invention. That is, in the computer program that makes a computer function as an information processing device which performs machine learning utilizing a tree structure model configured by branching and hierarchically arranging a plurality of nodes respectively corresponding to hierarchically divided state spaces, the computer program relating to the present invention includes: a learning object dataset reading step of reading a learning object dataset formed of a plurality of input columns and one or more output columns; an importance degree calculation step of calculating importance degrees of the individual input columns based on the learning object dataset; an order generation step of generating an order of the individual input columns to be a base of branch determination of the individual nodes, based on the individual importance degrees; and a machine learning step of performing the machine learning based on the learning object dataset and the order.

Advantageous Effect of Invention

According to the present invention, the accuracy of machine learning can be improved by preventing a search space from being wrongfully limited.

Brief Description of Drawings

[Figure 1] Figure 1 is a hardware configuration diagram of an information processing device.
[Figure 2] Figure 2 is a general flowchart relating to learning processing.
[Figure 3] Figure 3 is a general flowchart relating to branch column generation processing.
[Figure 4] Figure 4 is a detailed flowchart relating to importance degree analysis processing.
[Figure 5] Figure 5 is an explanatory diagram relating to a correlation coefficient.
[Figure 6] Figure 6 is a detailed flowchart relating to the branch column generation processing.
[Figure 7] Figure 7 is an explanatory diagram relating to branch column generation.
[Figure 8] Figure 8 is an explanatory diagram relating to a basic configuration of learning.
[Figure 9] Figure 9 is an explanatory diagram relating to a branch column.

Description of Embodiment

Hereinafter, one embodiment of the present invention will be described in details with reference to attached drawings.

<1. First embodiment>

<1.1 Configuration>

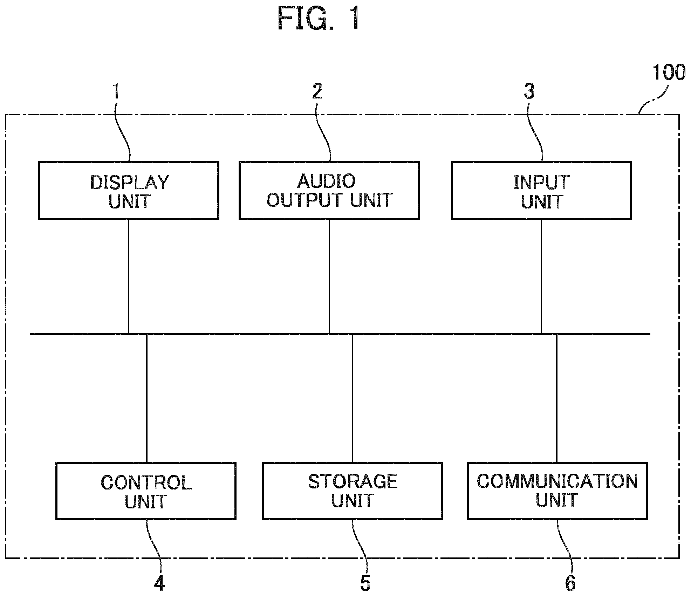

With reference to Figure 1, the configuration of hardware of an information processing device 100 where machine learning processing and prediction processing or the like are executed relating to the present embodiment will be described. It is clear from the figure that the information processing device 100 relating to the present embodiment is configured by connecting a display unit 1, an audio output unit 2, an input unit 3, a control unit 4, a storage unit 5 and a communication unit 6 via a bus. The information processing device 100 is, for example, a personal computer (PC), a smartphone or a tablet terminal.

The display unit 1 is connected with a display or the like, controls display and provides a user with a GUI via the display or the like. The audio output unit 2 performs processing relating to audio information, and outputs audio through a speaker or the like. The input unit 3 processes signals inputted via a keyboard, a touch panel and a mouse or the like.

The control unit 4 is an information processing unit such as a CPU and a GPU, and performs overall control of the information processing device 100 and execution processing of a program of learning processing or prediction processing or the like. The storage unit 5 is a volatile or nonvolatile storage device such as a ROM, a RAM, a hard disk or a flash memory, and stores various kinds of data and programs such as learning object data, a machine learning program and a prediction processing program. The communication unit 6 is a communication unit which communicates with external equipment by cable or radio.

Note that the hardware configuration is not limited to the configuration relating to the present embodiment and the configuration and functions may be distributed or integrated. For example, it is needless to say that the processing may be distributively performed using the plurality of information processing devices or a mass storage may be further provided outside and connected with the information processing device 100 or the like. In addition, the processing may be performed by forming a computer network via the Internet or the like.

Further, the processing relating to the present embodiment may be implemented not only as software but also as a semiconductor circuit (IC or the like) such as an FPGA, that is, hardware.

<1.2 Operation>

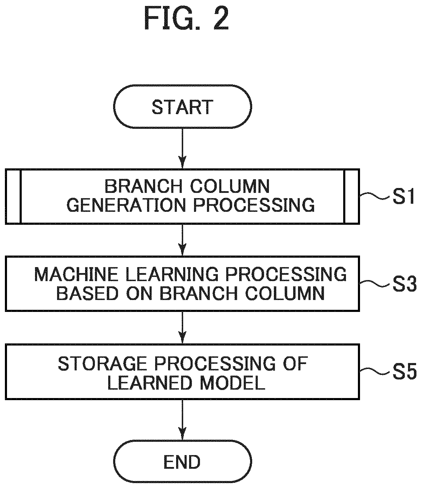

Figure 2 is a general flowchart relating to the learning processing performed in the information processing device 100.

It is clear from the figure that, when the learning processing is started, generation processing of an order of input columns used in branch determination in nodes configuring a tree structure, that is, a branch column is performed (S1).

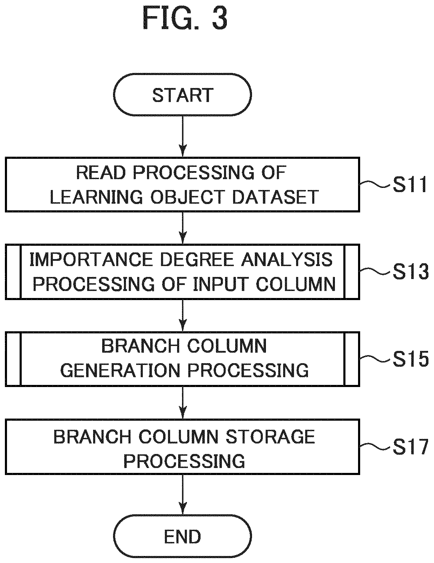

With reference to Figure 3-Figure 7, details of the branch column generation processing (S1) will be described.

Figure 3 is a general flowchart relating to the branch column generation processing (S1). It is clear from the figure that the processing of reading a learning object dataset, that is, a set of the plurality of input columns and one or more output columns, from the storage unit 5 is performed (S11). Thereafter, based on the read learning object dataset, the processing of analyzing importance degrees of the individual input columns is performed (S13). Note that, in the present embodiment, as an example, the input columns are imax-dimensional, and the number of the output columns is one-dimensional.

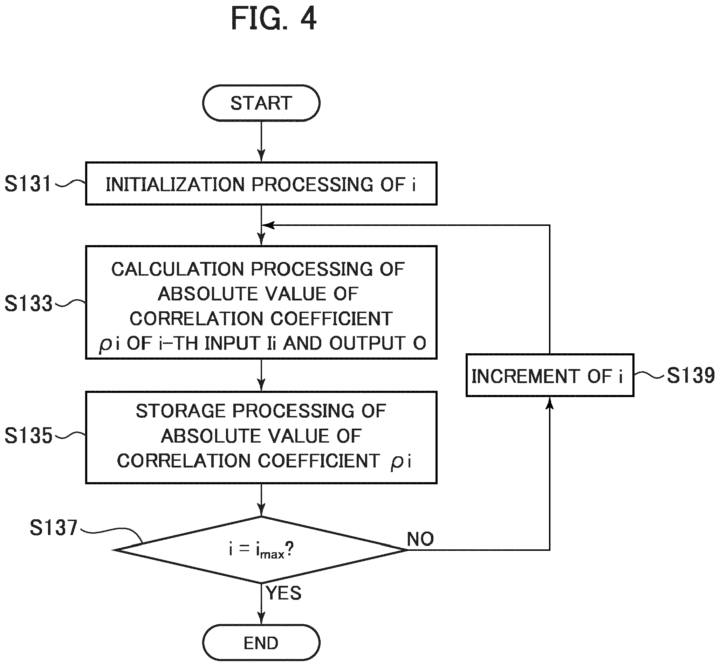

Figure 4 is a detailed flowchart relating to the importance degree analysis processing. When the processing is started, the processing of initializing an eigenvalue i (integer) given for convenience to the individual input columns of the learning object dataset is performed (S131). When the initialization processing is completed, the processing of calculating a correlation coefficient $\rho_i$ between an i-th input column Ii and an output column O based on an expression below and calculating an absolute value of the $\rho_i$ is performed (S133). Note that $\sigma_X$ indicates a standard deviation of the object input column, $\sigma_Y$ indicates the standard deviation of the object output column and $\sigma_{XY}$ indicates a covariance.

$$\rho = \frac{\sigma_{XY}}{\sigma_X \sigma_Y}$$

[Expression 1]

Thereafter, the processing of storing the absolute value of the correlation coefficient $\rho_i$ in the storage unit 5 is performed (S135). Note that, as to be described later, the absolute value of the correlation coefficient $\rho_i$ is a numerical value corresponding to the importance degree.

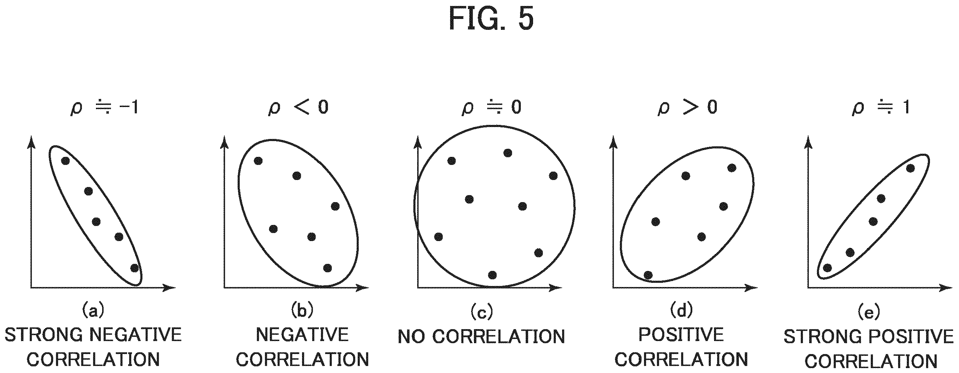

Figure 5 is an explanatory diagram (a conceptual diagram) relating to the correlation coefficient. Figure 5(a) indicates a case where there is a strong negative correlation between two random variables, Figure 5(b) indicates the case where there is a weak negative correlation between the two random variables, Figure 5(c) indicates the case where there is no correlation, Figure 5(d) indicates the case where there is a weak positive correlation between the two random variables and Figure 5(e) indicates the case where there is a strong positive correlation between the two random variables. By taking the absolute value of the correlation coefficient, for example, the case where there is some kind of correlation between the two random variables corresponding to Figure 5(a), Figure 5(b), Figure 5(d) and Figure 5(e) can be extracted.

Thereafter, the processing of comparing the value i with $i_{max}$ is performed, and when it is determined that the value i is still smaller than $i_{max}$, the processing of incrementing i by 1 is performed (S139). Such processing (S133-S137NO, S139) is performed until the value i coincides with $i_{max}$.

In the case where the value i coincides with $i_{max}$ (S137YES), the importance degree analysis processing (S13) is ended.

Returning to Figure 3, when the importance degree analysis processing is ended, the branch column generation processing is performed (S15).

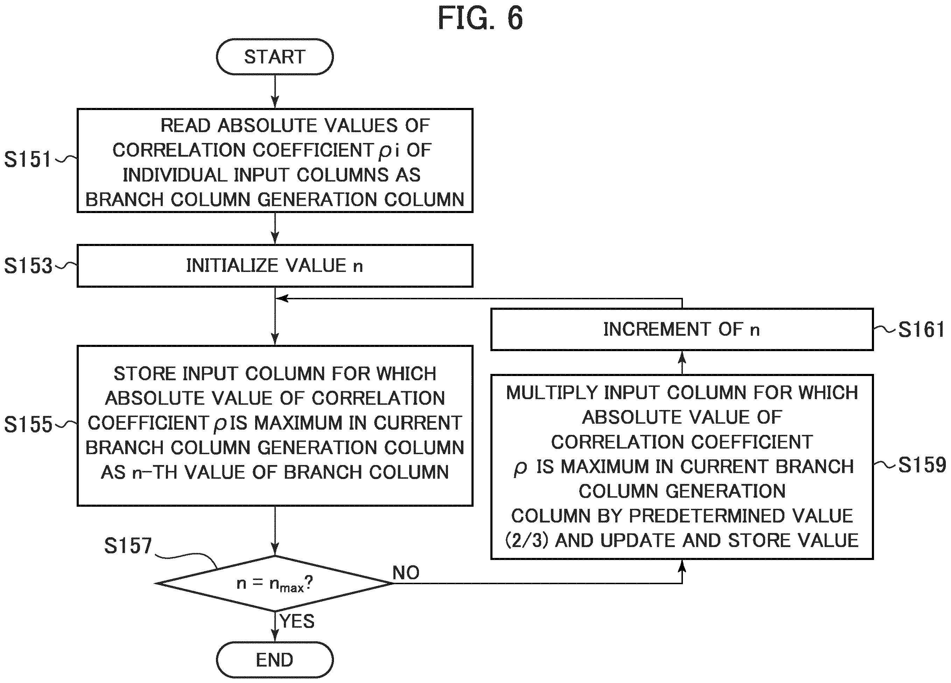

Figure 6 is a detailed flowchart relating to the branch column generation processing. When the processing is started, the absolute value of the correlation coefficient $\rho_i$ relating to the individual input columns is read from the storage unit 5 as a branch column generation column (S151). Thereafter, the processing of initializing an integer value n indicating a length of a branch column for convenience is performed (S153).

After predetermined initialization processing, the input column for which the absolute value of the correlation coefficient $\rho$ is maximum in the current branch column generation column is stored in the storage unit 5 as an n-th value of a branch column. Thereafter, whether or not n coincides with a predetermined maximum setting value $n_{max}$ is determined (S157). When it is determined that the value n does not coincide with $n_{max}$ (S157NO), the value is updated and stored by multiplying the absolute value of the correlation coefficient of the input column for which the absolute value of the correlation coefficient $\rho$ is maximum in the current branch column generation column by a predetermined value, the value larger than 0 and smaller than 1 in particular, 2/3 for example in the present embodiment (S159). Then, n is incremented by 1, and the above-described processing (S155, S157NO, S159 and S161) is repeated again.

Thereafter, when it is determined that the value n coincides with $n_{max}$ (S157YES), the branch column generation processing is ended.

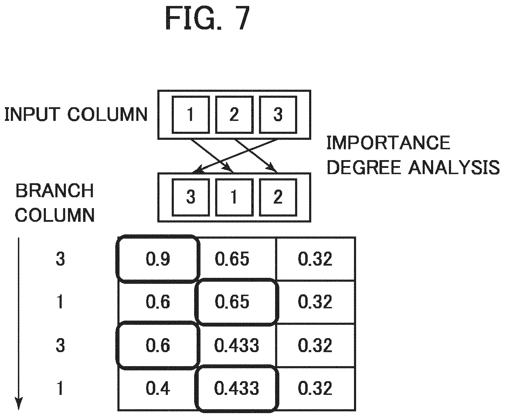

With reference to Figure 7, the operation relating to the flowchart in Figure 6 will be specifically described. Figure 7 is an explanatory diagram relating to the branch column generation. In an example in the figure, an initial input column is three-dimensional, and numbers 1-3 are allocated to the individual input columns for convenience. In addition, it is assumed that the importance degree is calculated as 0.9 for the third input column, the importance degree is calculated as 0.65 for the input column 1 and the importance degree is calculated as 0.32 for the input column 2 by performing the importance degree analysis processing (S13) to the input columns. That is, the importance degrees are calculated as being big in order of "3→1→2" and the initial input columns are stored in the storage unit 5.

At the time, when the branch column generation processing (S15) is started, the processing of reading the absolute values of the correlation coefficient $\rho_i$ of the individual input columns is performed (S151), and n is initialized as 1 (S153). Thereafter, the third input column for which the absolute value of the correlation coefficient is 0.9 and is maximum is stored as the first branch column. Then, whether or not the value n is a maximum value $n_{max}$ (4 in the example in the figure) of n is determined (S157).

Here, since the value n does not coincide with the maximum value 4 (S157NO), the processing of multiplying the third input column for which the absolute value of the correlation coefficient $\rho$ is maximum in the current branch generation column by 2/3 and updating and storing the branch column generation column is performed (S159). That is, the processing of multiplying the value 0.9 of the third input column by 2/3 and attaining 0.6 is performed, and the importance degrees of the individual input columns "3, 1, 2" are updated to "0.6, 0.65, 0.32" respectively.

Thereafter, the value n is incremented by 1 and turned to 2, and the similar processing is repeated again. That is, the processing of storing the first input column that is the input column for which the absolute value of the correlation coefficient $\rho$ becomes maximum (0.65) next as the branch column and then multiplying the numerical value by 2/3 is performed. The above-described processing is repeated until the value n coincides with 4. As a result, in the example in the figure, the branch column finally becomes "3→1→3→1".

Returning to Figure 3, when the branch column generation processing (S15) is ended, the processing of storing the generated branch column in the storage unit 5 is performed (S17), and the branch column generation processing (S1) is ended.

Returning to Figure 2, when the branch column generation processing (S1) is ended, the machine learning processing based on the branch column is performed (S3). That is, the processing of performing the branch determination of the individual nodes from the high order of the tree structure based on the generated branch column and storing the individual data in the individual nodes is performed.

For example, in the case of using the branch column in Figure 7, conditional determination is performed in order of the input columns "3→1→3→1" from a root node to a terminal node, and the individual input data is stored in the nodes. Note that, for examples of the machine learning processing, various kinds of known literature such as Japanese Patent Laid-Open No. 2016-173686 may be referred to.

When the machine learning processing based on the branch column is ended, the processing of storing a generated learned model in the storage unit 5 is performed (S5).

According to such a configuration, since a state space is preferentially searched from the input column of the high importance degree, a search space is not wrongfully limited. Therefore, the state space to be originally searched can be fully searched so that accuracy of machine learning can be improved.

Note that, by performing appropriate learning processing, the accuracy of the prediction processing utilizing the learned model is also improved.

<2. Modification>

The absolute value of the correlation coefficient is utilized as the importance degree in the importance degree analysis processing (S13) in the above-described embodiment, however, the present invention is not limited to such a configuration. Therefore, for example, various indexes other than the correlation coefficient can be utilized.

The processing of dynamically generating the branch column (S15) is performed after performing the importance degree analysis processing (S13) in the above-described embodiment, however, the present invention is not limited to such a configuration. Therefore, for example, the branch column may be generated simply in order of the importance degrees.

Industrial Applicability

The present invention is applicable in various industries or the like utilizing a machine learning technology.

Reference Signs List

1 Display unit

2 Audio output unit
3 Input unit
4 Control unit
5 Storage unit
6 Communication unit
100 Information processing device

**Claims**

1. An information processing device which performs machine learning utilizing a tree structure model configured by branching and hierarchically arranging a plurality of nodes respectively corresponding to hierarchically divided state spaces, the information processing device, comprising:

   a learning object dataset reading unit configured to read a learning object dataset formed of a plurality of input columns and one or more output columns;
   an importance degree calculation unit configured to calculate importance degrees of the individual input columns based on the learning object dataset;
an order generation unit configured to generate an order of the individual input columns to be a base of branch determination of the individual nodes, based on the individual importance degrees; and
a machine learning unit configured to perform the machine learning based on the learning object dataset and the order.

2. The information processing device according to Claim 1, the order generation unit, further comprising:
a detailed order generation unit configured to generate the order such that the input column of a high importance degree corresponds to an upper node in the tree structure model.

3. The information processing device according to Claim 1, wherein the individual importance degrees are generated based on relevancy between the individual input columns and the individual corresponding output columns.

4. The information processing device according to Claim 3, wherein the relevancy is an absolute value of a correlation coefficient between the individual input columns and the individual corresponding output columns.

5. The information processing device according to Claim 4, the order generation unit, comprising:

   a maximum correlation coefficient input column specification unit configured to specify the input column for which the correlation coefficient is maximum among the individual input columns and perform incorporation into the order;
   a division unit configured to divide the correlation coefficient of the input column specified as having the maximum correlation coefficient by a predetermined numerical value; and
   a repetitive processing unit configured to repeatedly operate the maximum correlation coefficient input column specification unit and the division unit for a predetermined number of times and generate the order of the individual input columns.

6. The information processing device according to Claim 1, the order generation unit, comprising:
an importance-degree-order order generation unit configured to generate the order of the individual input columns in order of the importance degrees of the individual input columns.

**EP 4 020 337 A1**

7. An information processing method which performs machine learning utilizing a tree structure model configured by branching and hierarchically arranging a plurality of nodes respectively corresponding to hierarchically divided state spaces, the information processing method, comprising:

   a learning object dataset reading step of reading a learning object dataset formed of a plurality of input columns and one or more output columns;
   an importance degree calculation step of calculating importance degrees of the individual input columns based on the learning object dataset;
   an order generation step of generating an order of the individual input columns to be a base of branch determination of the individual nodes, based on the individual importance degrees; and
   a machine learning step of performing the machine learning based on the learning object dataset and the order.

8. A computer program that makes a computer function as an information processing device which performs machine learning utilizing a tree structure model configured by branching and hierarchically arranging a plurality of nodes respectively corresponding to hierarchically divided state spaces, the computer program, comprising:

   a learning object dataset reading step of reading a learning object dataset formed of a plurality of input columns and one or more output columns;
   an importance degree calculation step of calculating importance degrees of the individual input columns based on the learning object dataset;
   an order generation step of generating an order of the individual input columns to be a base of branch determination of the individual nodes, based on the individual importance degrees; and
   a machine learning step of performing the machine learning based on the learning object dataset and the order.

# FIG. 1

EP 4 020 337 A1

# FIG. 2

```
            ┌─────────────┐
            │    START    │
            └──────┬──────┘
                   │
                   ▼
       ┌───────────────────────────┐
       │║    BRANCH COLUMN         ║│──── S1
       │║  GENERATION PROCESSING   ║│
       └───────────┬───────────────┘
                   │
                   ▼
       ┌───────────────────────────┐
       │ MACHINE LEARNING PROCESSING│──── S3
       │   BASED ON BRANCH COLUMN   │
       └───────────┬───────────────┘
                   │
                   ▼
       ┌───────────────────────────┐
       │   STORAGE PROCESSING OF    │──── S5
       │      LEARNED MODEL         │
       └───────────┬───────────────┘
                   │
                   ▼
            ┌─────────────┐
            │     END     │
            └─────────────┘
```

# FIG. 3

EP 4 020 337 A1

```
        ┌──────────┐
        │  START   │
        └────┬─────┘
             │
             ▼
┌──────────────────────────┐
│    READ PROCESSING OF     │ ─── S11
│  LEARNING OBJECT DATASET  │
└────────────┬─────────────┘
             │
             ▼
┌──────────────────────────┐
│ IMPORTANCE DEGREE ANALYSIS│ ─── S13
│ PROCESSING OF INPUT COLUMN│
└────────────┬─────────────┘
             │
             ▼
┌──────────────────────────┐
│     BRANCH COLUMN         │ ─── S15
│  GENERATION PROCESSING    │
└────────────┬─────────────┘
             │
             ▼
┌──────────────────────────┐
│  BRANCH COLUMN STORAGE    │ ─── S17
│       PROCESSING          │
└────────────┬─────────────┘
             │
             ▼
        ┌──────────┐
        │   END    │
        └──────────┘
```

# FIG. 4

START

S131 — INITIALIZATION PROCESSING OF i

S133 — CALCULATION PROCESSING OF ABSOLUTE VALUE OF CORRELATION COEFFICIENT $\rho i$ OF i–TH INPUT Ii AND OUTPUT O

S135 — STORAGE PROCESSING OF ABSOLUTE VALUE OF CORRELATION COEFFICIENT $\rho i$

S137 — $i = i_{max}?$

NO → INCREMENT OF i — S139

YES

END

EP 4 020 337 A1

# FIG. 5

| $\rho \fallingdotseq -1$ | $\rho < 0$ | $\rho \fallingdotseq 0$ | $\rho > 0$ | $\rho \fallingdotseq 1$ |
|---|---|---|---|---|
| (a) STRONG NEGATIVE CORRELATION | (b) NEGATIVE CORRELATION | (c) NO CORRELATION | (d) POSITIVE CORRELATION | (e) STRONG POSITIVE CORRELATION |

# FIG. 6

START

S151 — READ ABSOLUTE VALUES OF CORRELATION COEFFICIENT $\rho i$ OF INDIVIDUAL INPUT COLUMNS AS BRANCH COLUMN GENERATION COLUMN

S153 — INITIALIZE VALUE n

S155 — STORE INPUT COLUMN FOR WHICH ABSOLUTE VALUE OF CORRELATION COEFFICIENT $\rho$ IS MAXIMUM IN CURRENT BRANCH COLUMN GENERATION COLUMN AS n-TH VALUE OF BRANCH COLUMN

S157 — $n = n_{max}$?

NO → S159 — MULTIPLY INPUT COLUMN FOR WHICH ABSOLUTE VALUE OF CORRELATION COEFFICIENT $\rho$ IS MAXIMUM IN CURRENT BRANCH COLUMN GENERATION COLUMN BY PREDETERMINED VALUE (2/3) AND UPDATE AND STORE VALUE

S161 — INCREMENT OF n

YES

END

EP 4 020 337 A1

FIG. 7

# FIG. 8

ROOT NODE

1 HIERARCHY

DIMENSION 1

DIMENSION 2

N HIERARCHY

DIMENSION 1

DIMENSION 2

(a)

STRUCTURE OF
LEARNING TREE

DIMENSION 2

DIMENSION 1

DIMENSION 2

DIMENSION 1

(b)

EXPRESSED
STATE SPACE

EP 4 020 337 A1

FIG. 9

INPUT COLUMN

| 1 | 2 | 3 |

BRANCH COLUMN

1
2
3

## INTERNATIONAL SEARCH REPORT

| International application No. |
| --- |
| PCT/JP2020/029357 |

**A. CLASSIFICATION OF SUBJECT MATTER**
G06N 20/00(2019.01)i
FI: G06N20/00

According to International Patent Classification (IPC) or to both national classification and IPC

**B. FIELDS SEARCHED**

Minimum documentation searched (classification system followed by classification symbols)
G06N20/00

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2016-173686 A (IWATE UNIVERSITY) 29.09.2016 (2016-09-29) entire text | 1–8 |
| A | WO 2019/026702 A1 (AISING LTD.) 07.02.2019 (2019-02-07) entire text | 1–8 |
| A | 金 天海 ほか，力学系学習木における誤差ベース予測アルゴリズム，情報処理学会研究報告 数理モデル化と問題解決(MPS), 20 February 2017, vol. 2017-NIPS-112, no. 5, pp. 1-4, entire text, non-official translation (KIM, Chyon-Hae et al., "Error-based forecasting algorithm in dynamical learning tree", IPSJ SIG Technical Reports: Mathematical modeling and Problem Solving(MPS)) | 1–8 |

☐ Further documents are listed in the continuation of Box C.　　☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 September 2020 (29.09.2020) | 13 October 2020 (13.10.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/029357

| Patent Documents referred in the Report | Publication Date | Patent Family | Publication Date |
|---|---|---|---|
| JP 2016-173686 A | 29 Sep. 2016 | (Family: none) | |
| WO 2019/026702 A1 | 07 Feb. 2019 | US 2019/0138933 A1 entire text | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016173686 A